# EUROPÄISCHE PATENTSCHRIFT

(11) **EP 3 144 211 B1**
(45) Veröffentlichungstag und Bekanntmachung des Hinweises auf die Patenterteilung: **05.06.2019**
(21) Anmeldenummer: 16001985.7
(22) Anmeldetag: 13.09.2016
(51) Int. Cl.: B63B 9/00, G05B 19/4065

(54) **WASSERFAHRZEUG MIT WENIGSTENS EINEM ELASTISCH VERFORMBAREN BAUTEIL UND VERFAHREN ZUR FESTSTELLUNG DES BEGINNS EINER VERSCHLEISSBEDINGTEN BAUTEIL-RESTNUTZUNGSDAUER AN EINEM WASSERFAHRZEUG**
AQUATIC VEHICLE WITH AT LEAST ONE ELASTICALLY DEFORMABLE COMPONENT AND METHOD FOR DETECTING THE ONSET OF A WEAR-RELATED COMPONENT REMAINING LIFE ON A WATERCRAFT
NAVIRE COMPRENANT AU MOINS UN COMPOSANT DEFORMABLE ELASTIQUEMENT ET PROCEDE DE DETERMINATION DU DEBUT D'UNE VIE RESIDUELLE D'UN COMPOSANT SUR UN NAVIRE, EN FONCTION DE L'USURE

(30) Priorität: 15.09.2015 DE 102015011764
(43) Veröffentlichungstag der Anmeldung: 22.03.2017
(73) Patentinhaber: Jörn GmbH, 71336 Waiblingen (DE)
(72) Erfinder: Reinke, Kai, 71686 Remseck (DE)
(74) Vertreter: Liebl, Thomas

(56) Entgegenhaltungen:
- DE-A1- 3 620 355
- US-A- 4 179 940
- US-A1- 2011 054 806
- US-B1- 6 460 012

## Beschreibung

Die Erfindung betrifft ein Wasserfahrzeug mit einem Antriebsaggregat und mit wenigstens einem elastisch verformbaren Bauteil als Strukturteil und/oder Lagerteil nach dem Oberbegriff des Anspruchs 1.

Der Schiffverkehr mit Wasserfahrzeugen jeglicher Art, die geschäftlich zur Beförderung von Personen und Waren genutzt werden, ebenso wie der Sportbootbereich, nimmt weiter mit steigender Anzahl von Schiffen zu. Obwohl die meisten benutzten Wasserfahrzeuge einen hohen technischen Entwicklungsstandard aufweisen, ist deren sicherer Betrieb bei möglichst geringen Betriebs- und Wartungskosten eine ständige Herausforderung. Ein Problem ist dabei die Abschätzung der Nutzungsdauer von elastisch verformbaren Bauteilen.

Unter "Wasserfahrzeug" werden hier alle möglichen motorisierten Schiffe wie Personenschiffe, Fähren, Kreuzfahrtschiffe, Frachter, Öltanker, Sportboote oder ähnliche verstanden, bei denen auf elastisch verformbare Bauteil als Strukturteile und/oder Lagerteile im Betrieb abhängig von wechselnden Antriebszuständen unterschiedliche Verformungskräfte einwirken, die letztendlich zu einem die Bauteilnutzungsdauer begrenzenden Bauteilverschleiß führen. Solche elastisch verformbaren Bauteile sind insbesondere Gummi-Metalllager als Motorlager und/oder Getriebelager und/oder elastische Kupplungen. Weiter sind dies Strukturteile aus Kunststoff, insbesondere aus Faserverbundwerkstoffen.

Auch der weiter verwendete Begriff "Gummi-Metalllager" ist, wie in Fachkreisen üblich, allgemein zu verstehen und weit auszulegen, wobei "Gummi" als Synonym für "Elastomermaterial" und "Metall" für ein verformungssteifes Lagerbauteil steht, das insbesondere auch aus Kunststoff bestehen kann.

Solche Gummi-Metalllager und/oder Kunststoffteile, insbesondere Faserverbundteile, sind bekanntlich bei richtiger Auslegung über eine lange Nutzungsdauer auch bei hohen oszillierenden Belastungen funktionssicher und im Prinzip verschleißfrei. Ein Kriterium für die Funktion eines solchen Bauteils ist die Verformung unter Krafteinwirkung bzw. die entsprechende Bauteilsteifigkeit.

An Muster-Bauteilen und an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden Kraft und Verformung gemessen, wobei einer der beiden Werte vorgegeben wird. Daraus wird ein Diagramm als Messkurve erzeugt, in dem eine abfallende Steifigkeit über die Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Stufen erkennbar. In der ersten Stufe fällt die Steifigkeit sehr schnell, beispielsweise um zirka 30% ab, was als Fließen und Setzen bezeichnet wird. Anschließend wird über eine vergleichsweise sehr lange Nutzungsdauer nur ein sehr geringer Abfall der Steifigkeit gemessen entsprechend einem Plateauverlauf mit linearem und/oder leichtem Abfall der Steifigkeit. Daran schließt sich ein messbarer vergleichsweise zügiger progressiver Abfall der Steifigkeit an, welcher das nahe Ende der Bauteilfunktion mit einem möglichen Ausfall und damit das Ende der Nutzungsdauer markiert.

Der Grund für dieses messbare Verhalten insbesondere eines Gummi-Metall-Lagers liegt darin, dass bei dauernden hohen oszillierenden Belastungen durch anliegende Kräftemomente oder durch aufgezwungene Verformungen Molekülketten aufreißen, die sich dann wegen der anliegenden Wechsellasten nicht mehr regenerieren können. Insbesondere in der dritten Stufe potenzieren sich diese Vorgänge und es kommt auch zu optisch erkennbaren Rissen und Schäden, die mit einem schnellen Abfall der Bauteilsteifigkeit zu einem beginnenden Ende der Nutzungsfunktion und letztendlich zu einem Ausfall führen. Ausgehend von Messungen der Nutzungsdauer auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Eine übliche typische Nutzungsdauer entsprechend der ersten und zweiten Stufe des oben genannten Diagramms liegt in der Größenordnung von 6 bis 10 Jahren. Wenn die dritte Diagrammstufe erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich den vorstehend in Verbindung mit einem Gummi-Metall-Lager erläuterten Steifigkeitsverlauf verhält sich bei entsprechenden Belastungen üblicherweise auch ein Kunststoffteil, insbesondere ein Faserverbundbauteil, bei dem sich durch oszillierende Belastungen und erzwungene Verformungen der Faserverbund lockert und auflöst.

Bei vielen Anwendungen solcher Bauteile kann das beginnende Ende der Nutzungsdauer entsprechend der dritten Diagrammstufe relativ einfach erkannt werden, beispielsweise durch eine veränderte Geräuschentwicklung oder bei einem Straßenfahrzeug durch ein verändertes Fahrverhalten. Bei leicht zugänglichen Einbausituationen kann eine beginnende Schädigung entsprechend der dritten Diagrammstufe gegebenenfalls auch optisch erkannt werden. Bei vielen Einbausituationen in Wasserfahrzeugen sind solche einfache Kontrollen nicht möglich, so dass ein Bauteilschaden zu einem Sicherheitsrisiko und/oder zu teuren Folgeschäden und Betriebsausfällen führen kann.

Gerade dafür werden bisher relevante Bauteile nach Möglichkeit im Vorfeld getestet und mit gemessenen Belastungsdaten eine maximale Laufzeit festgelegt, nach der sie unter Berücksichtigung einer normalen Streuung und mit Sicherheitsabschlägen meist lange vor einer möglichen Lebensdauer getauscht werden, lange bevor eine Schädigung weit fortgeschritten ist.

Nachteilig muss für einen solchen präventiven Tausch eines Bauteils in regelmäßigen Wartungsintervallen das Wasserfahrzeug außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil- und Wartungskosten, die noch nicht durch den aktuellen und noch funktionssicheren Bauteilzustand erforderlich wären. Da in einem Wasserfahrzeug regelmäßig mehrere solcher Bauteile, beispielsweise Gummi-Metall-Lager verbaut sind, vervielfachen sich die Kosten entsprechend.

Zudem ist ein Verfahren zur Feststellung eines Verschleißzustands eines Strukturbauteils bekannt (US 6,460,012 B1), bei dem Lastdaten zusammen mit Verformungsdaten erfasst werden. Daraus werden in Verbindung mit einer Intervallbetrachtung eine Rissvergrößerungs-Funktion und daraus eine Indikator-Funktion gebildet, aus der ein möglicher verschleißbedingter Ausfall des Strukturbauteils ableitbar ist.

Weiter ist ein Verfahren bekannt (US 2011/0054806 A1), bei dem mit Rechenoperationen aus laufend erfassten Zustandsdaten von Komponenten ein gegebenenfalls zukünftiger Komponentenausfall zeitlich vorhersagbar sein soll.

Aufgabe der Erfindung ist es, bei einem Wasserfahrzeug mit wenigstens einem elastisch verformbaren Bauteil als Strukturteil und/oder Lagerteil die mögliche Bauteilnutzungsdauer genauer festzustellen, als dies durch Prüfstandsmessungen und Abschätzungen möglich ist.

Die Aufgabe wird mit den Merkmalen des Anspruchs 1 gelöst. Vorteilhafte Ausgestaltungen sind Gegenstand der darauf rückbezogenen Unteransprüche.

Gemäß Anspruch 1 ist bei einem solchen Wasserfahrzeug ein sich zeitversetzt wiederholender, jeweils gleicher Antriebszustand vorbestimmbar, dem eine bestimmte, jeweils gleiche Verformungskraft zugeordnet ist. Es ist eine Erfassungseinheit vorgesehen, die so eingerichtet ist, dass damit jeweils ein solcher vorbestimmter Antriebszustand erkannt und erfasst wird. Vorzugsweise wird ein Antriebszustand ausgewählt und bestimmt, der relativ häufig mit einer deutlich messbaren Bauteilverformung auftritt, so dass eine relativ große Anzahl von auswertbaren Messergebnissen gewonnen werden kann. Vorzugsweise sollen beim ausgewählten Antriebszustand Lastniveaus mit relativ hohem Schädigungsanteil, insbesondere andauernde, hohe oszillierende Belastungen am Bauteil auftreten. Dabei wird davon ausgegangen, dass bei weitgehend gleichen Antriebszuständen des Wasserfahrzeugs die dadurch am Bauteil auftretenden Verformungskräfte ebenfalls weitgehend gleich sind. Grundsätzlich könnten auch mehrere unterschiedliche Antriebszustände für mehrere parallele Auswertungen oder für Auswertungen an mehreren im Wasserfahrzeug verbauten Bauteilen vorbestimmt werden.

Im Fall der Erkennung und Erfassung eines solchen vorbestimmten Antriebszustands durch die Erfassungseinheit, wird damit ein Startsignal erzeugt, womit ein Messvorgang gestartet wird, wobei für eine Bauteilüberwachung mit wenigstens einem bauteilzugeordneten Sensor und einer nachgeschalteten Mess- und Auswerteeinheit eine Bauteilverformung als Kenngröße für eine aktuelle Bauteilsteifigkeit messbar ist und der Messwert speicherbar ist. Die auf das Bauteil einwirkende Verformungskraft muss hier vorteilhaft nicht absolut gemessen werden. Ebensowenig ist es erforderlich, die Bauteilverformung bzw. deren Kehrwert als Bauteilsteifigkeit absolut zu messen, da bei der weiteren Auswertung nur Relativwerte und tendenzielle Verläufe zwischen aufeinanderfolgenden Messwerten herangezogen werden. Es ist auch nicht zwingend erforderlich einen Antriebszustand für das Startsignal und die Messung völlig exakt zu bestimmen, da die Vorbestimmung eines engen "Antriebsfensters" gut verwertbare Ergebnisse liefert, was hier mit umfasst sein soll. Zudem ist eine Messkurve aus den Messwerten zum Ausgleich von Messtoleranzen zu mitteln und zu glätten.

Mit einer Vergleichereinheit der Mess- und Auswerteeinheit ist ein Vergleich eines aktuellen Verformungsmesswerts bezüglich vorhergehender gespeicherter Verformungsmesswerte durchführbar, wobei sich zwei unterschiedliche Ergebnisse zeigen können:
Die über eine relativ lange Nutzungsdauer gespeicherten Verformungsmesswerte bzw. entsprechende Kenngrößen für die Bauteilsteifigkeit sind etwa gleich. Bei der Erstellung der Messkurve ergibt sich ein Plateaubereich mit im Verlauf der langen Nutzungsdauer von üblicherweise mehreren Jahren nur relativ geringem Neigungsanstieg für die Bauteilverformung bzw. Neigungsabfall für die Bauteilsteifigkeit. Bei so einem Vergleichsergebnis ist eine weitere sichere Bauteilfunktion feststellbar. Dieser Plateaubereich entspricht der eingangs erwähnten zweiten Stufe des dort erwähnten Steifigkeitsdiagramms.

Wenn aber über eine gegenüber der Nutzungsdauer des Plateaubereichs relativ kurze Nutzungsdauer von üblicherweise wenigen Tagen/Wochen nacheinander sukzessiv und progressiv größer werdende Verformungsmesswerte erfassbar sind, ist der unkritische Plateaubereich deutlich mit einem starken Steigungsanstieg einer Messkurve bezüglich der Bauteilverformung bzw. einem starken Neigungsabfall einer Messkurve bezüglich der Bauteilsteifigkeit verlassen. Wenn ein solcher als Schwellwert vorgebbarer Steigungsanstieg bzw. Neigungsabfall festgestellt wird, ist damit der Beginn einer verschleißbedingten vorgebbaren Bauteil-Restnutzungsdauer feststellbar. Zudem ist eine entsprechende Warninformation, beispielsweise als optisches oder akustisches Signal ausgebbar, die auf einen erforderlichen Bauteilaustausch hinweist. Dieses zweite Ergebnis liegt vor, wenn die dritte Stufe im eingangs beschriebenen Steifigkeitsdiagramm erreicht ist.

Wenn zu Beginn einer Bauteilnutzung über einen gegenüber der Nutzungsdauer des Plateaubereichs relativ kurzen Zeitabstand ein steiler Bereich der Messkurve festgestellt wird, entspricht dies der ersten Stufe im vorstehend erläuterten Steifigkeitsdiagramm. Diese nachlassende Steifigkeit durch Fließen und Setzen zu Beginn der Nutzung ist unkritisch, die entsprechenden Messwerte werden bei der Bewertung für einen Beginn einer Restnutzungsdauer herausgenommen und nicht verwertet.

Kern der Erfindung ist somit eine qualitative Bestimmung der Steifigkeit des verformbaren Bauteils, die im verbauten Zustand im Wasserfahrzeug nicht unmittelbar kontrollierbar und messbar ist. Nur in Kenntnis einer Kraft und Verformung, wie beispielsweise auf einem Prüfstand, lässt sich die Steifigkeit absolut bestimmen. In einer technischen Anwendung ist es mit vertretbaren Aufwand nicht möglich, die an einem verbauten Bauteil anliegende Kraft zu messen. Wege oder Verformungen hingegen sind relativ einfach in an sich bekannter Weise zu messen. Die Bestimmung der Bauteillebensdauer wird erfindungsgemäß vorteilhaft nur durch einfach durchzuführende Auswertungen von Messwertveränderungen durchgeführt.

Zu unterschiedlichen Zeitpunkten wird dazu jeweils eine Messung der Bauteilverformung ausgelöst. Der Zeitpunkt entsprechend dem Auftreten eines vorbestimmten Antriebszustands wird so ausgewählt, dass Lastniveaus mit deutlich messbaren Verformungen und bevorzugt mit hohem Schädigungsanteil auftreten. Vorzugsweise wird dabei der Schädigungsanteil durch ein häufiges Auftreten dieses Lastniveaus erreicht und nicht durch hohe Lasten mit geringer Häufigkeit, um eine große Anzahl an Messergebnissen zu gewinnen, deren zwangsläufig auftretende Streuungen somit besser als Streuung und nicht als sich abzeichnender Bauteilschaden bewertbar ist.

Zur Erstellung einer Messkurve werden zweckmäßig auf der X-Achse eines Diagramms die Anzahl der erhaltenen Messwerte aufgetragen, die als Nutzungsdauer interpretierbar sind. Auf der Y-Achse kann die Verformung aufgetragen werden. Optisch verständlicher ist es jedoch deren Kehrwert, eins durch die Verformung, aufzutragen, womit eine Messkurve analog zum Verlauf der Steifigkeit erhalten wird. Damit zeigt sich in einer ersten Stufe zu Beginn der Bauteilnutzungsdauer ein starker Steifigkeitsabfall durch Fließen und Setzen, dem sich in einer zweiten Stufe ein Plateaubereich mit leicht linear abfallender Steifigkeit über die Lebensdauer anschließt, sowie am Ende der Nutzungsdauer in einer dritten Stufe ein stark progressiver Abfall. Für die Auswertung wird als Messkurve eine Gerade ermittelt, die das beschriebene Plateau in ihrem Verlauf gut abbildet, wobei dies bereits nach wenigen Messwerten im Plateaubereich möglich ist. Jeder weitere Messwert wird dahingehend bewertet, wie er die Charakteristik der zuvor ermittelten Geraden verändert oder davon abweicht. Vorzugsweise wird für eine Auswertung eine Veränderung der Steigung diese Gerade als Kriterium herangezogen. Nimmt nach dem Plateaubereich der Betrag der Steigung über mehrere Messwerte deutlich über den Wert der Streuung zu, so beginnt der Bereich des progressiven Steifigkeitsabfalls als Signal zum Austausch des Bauteils. Im Prinzip wird somit das Differenzial der gemittelten Messkurve ausgewertet.

Erfindungsgemäß wird somit vorteilhaft der Verschleißzustand eines verformbaren Bauteils während seiner Bauteilnutzungsdauer unmittelbar und direkt festgestellt. Damit kann ein Bauteil über seine tatsächliche Lebensdauer bis zum Beginn seines progressiven Steifigkeitsabfalls genutzt werden. Insbesondere können damit durch Nutzungsdauerschätzungen vorgegebene, präventive Austauschmaßnahmen vor dem tatsächlich möglichen Nutzungsende entfallen, wodurch Wartungs- und Betriebskosten eingespart werden. Zudem ist die Bauteilsicherheit durch die Messung am Bauteil erhöht und das Risiko eventueller Folgekosten bei einem nicht erkannten Bauteilausfall ist reduziert.

Der vorbestimmte Antriebszustand kann direkt als vorbestimmte Motorleistung des Antriebsaggregats erfasst werden. Dazu kann eine aktuelle Motordrehzahl oder entsprechende Schwingungsfrequenz verwertet werden, indem ohnehin im Wasserfahrzeug entsprechend vorhandene Messsignale zusätzlich genutzt werden. Bei der Erfassung des vorbestimmten Antriebszustands und/oder bei der Auswertung der Messungen können gegebenenfalls niederfrequente Anregungen durch Wellenschlag und/oder Seegang mit einem Tiefpassfilter herausgefiltert werden.

Bei jedem Auftreten eines vorbestimmten Betriebszustands kann jeweils ein einziger Messvorgang gestartet und durchgeführt werden. Alternativ und/oder zusätzlich kann bei einem langen Anhalten eines solchen Betriebszustands auch nach einer vorbestimmten Wartezeit jeweils selbsttätig wieder ein weiterer Messvorgang gestartet und durchgeführt werden.

Besonders geeignet für die erfindungsgemäße Überwachung sind die eingangs erwähnten, elastisch verformbaren Bauteile eines Wasserfahrzeugs als Gummi-Metalllager und als Strukturteile.

Da eine Bauteilverformung auch temperaturabhängig ist, soll als weitere Bedingung für den Start eines Messvorgangs und/oder für die Verwertung eines Messwerts ein Temperaturfenster von 6°C eingehalten werden, wobei dieses Temperaturfenster in einem Temperaturbereich von 0°C bis 35°C wählbar ist. Dabei wird berücksichtigt, dass Temperatureinflüsse bei Temperaturen unter 0°C und über 35°C zu starken, ungünstigen Messwertschwankungen führen. Der Temperatureinfluss auf die Messwerte in einem Temperaturfenster von 6°C innerhalb des Temperaturbereichs von 0°C bis 35°C ist dagegen für die erfindungsgemäße Auswertung vernachlässigbar.

Sollte ein Messvorgang wegen festgestellter ungünstiger Temperaturen nicht erfolgen oder durchgeführt und/oder nicht verwertet werden, jedoch die übrigen Startbedingungen insbesondere der vorbestimmte Betriebszustand erfüllt sein, wird ein Messwertzähler entsprechend einer Nutzungsdauer dennoch hoch gesetzt, um die Messkurve, insbesondere den Steifigkeitsverlauf nicht zu verzerren.

Ab dem Beginn des progressiven Steifigkeitsabfalls kann regelmäßig eine Weiterbenutzungsdauer als Restlebensdauer des Bauteils von 10% der bisherigen Bauteilnutzungsdauer angenommen werden. Diese Information kann zusätzlich zum Signal für den Austausch des Bauteils gegeben werden.

Konkret kann als Sensor zur Messung der Bauteilverformung eine Sensorik zur Messung einer Verschiebung und/oder einer Geschwindigkeit und/oder einer Beschleunigung verwendet werden. Eine Verformung kann dabei zwischen Bauteilkomponenten und/oder Anbauteilen direkt oder indirekt gemessen werden. Dabei kann die Sensorik in das verformbare Bauteil, insbesondere in ein Elastomer integriert sein und/oder an angrenzenden/benachbarten Anbauteilen angeordnet sein. Beispielsweise kann ein Abstand als Bauteilverformung direkt gemessen werden, indem auf der Innenseite eines Gummi-Metall-Lagers ein Signalgeber sitzt und auf der Außenseite ein Aufnehmer. Es ist auch möglich, bei den Elementen die Beschleunigungen zu messen, zweimal zu integrieren und zu addieren, so dass der Relativweg erhalten wird. Je nach den Gegebenheiten können an sich bekannte einfache induktive Wegaufnehmer, magnetoresistive Sensoren, Hallsonden, Beschleunigungssensoren oder andere Sensoren verwendet werden, mit der eine Verschiebung, eine Geschwindigkeit, eine Beschleunigung oder ein anderes verschiebungsäquivalentes Signal gemessen werden kann.

Zweckmäßig werden die Erfassungseinheit und die Mess- und Auswerteeinheit mit ihren Komponenten in eine meist im Wasserfahrzeug vorhandene Zentralelektronik voll- oder teilintegriert, wobei gegebenenfalls auch ohnehin für andere Zwecke vorhandene Messwerte, beispielsweise Motordrehzahlwerte mitverwertet werden können.

Anhand einer Zeichnung wird die Erfindung weiter erläutert.

Es zeigen:
- Fig. 1: eine schematische Darstellung eines Wasserfahrzeugs mit Komponenten zur Erzeugung eines Startimpulses für einen Messvorgang,
- Fig. 2: ein Ablaufdiagramm für die erfindungsgemäße Bestimmung des Beginns einer verschleißbedingten Restnutzungsdauer, und
- Fig. 3: ein typisches Diagramm einer Messkurve.

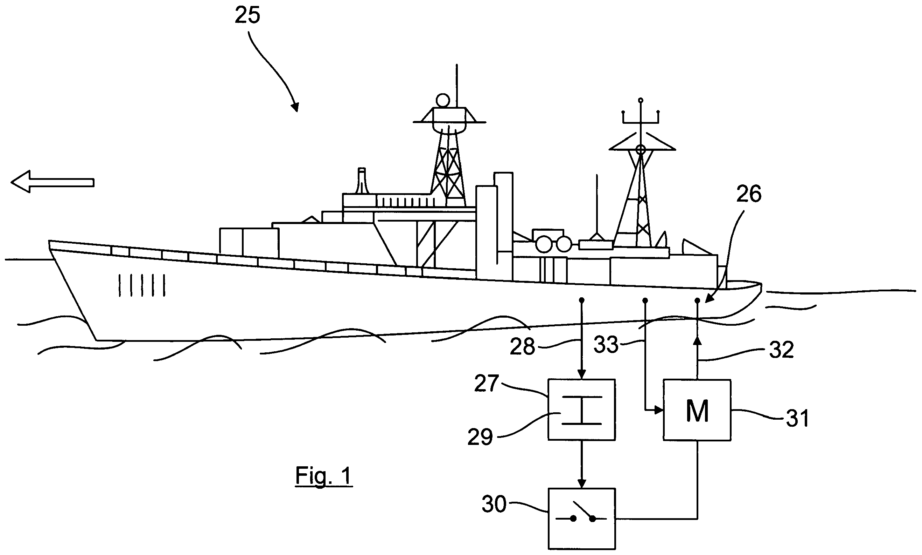

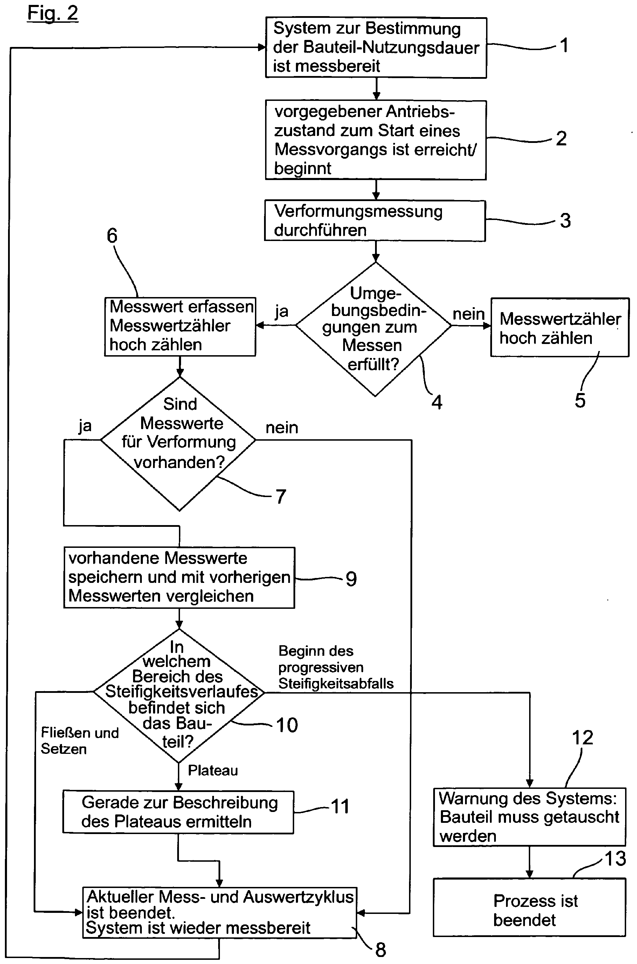

In Fig. 1 ist schematisch ein Wasserfahrzeug 25, beispielhaft als Forschungsschiff dargestellt mit einem (nicht gezeigten) inneren Antriebsaggregat, das mit unterschiedlicher Motorleistung entsprechend unterschiedlichen Motordrehzahlen betrieben werden kann. Beim Erreichen einer vorbestimmten Motorleistung soll eine Verformungsmessung an einem (nicht dargestellten) Motorlager 26 gestartet werden.
Dazu wird einer Erfassungseinheit 27 über eine Steuerleitung 28 ein Motordrehzahlsignal zugeführt. Wenn dieses ein definiertes Drehzahlfenster 29 entsprechend einem Leistungsfenster erreicht hat, wird mit einer Schalteinheit 30 ein Triggerimpuls zum Start, gegebenenfalls zum wiederholten Start eines Messvorgangs für eine Verformungsmessung durch die Mess- und Auswerteeinheit 31 erzeugt (Steuerleitung 32). Erfasste Messwerte werden über die Messleitung 33 der Mess- und Auswerteeinheit 31 zugeführt und entsprechend dem Ablaufdiagramm nach Fig. 2 verarbeitet.

In Fig. 1 ist die Prozessabfolge anhand von Status/Prozess-Rechtecken und Entscheidungsrauten dargestellt:

Gemäß dem ersten Rechteck 1 ist das System zur Bestimmung der Bauteilnutzungsdauer messbereit. Als Bauteil wird hier beispielhaft ein Gummi-Metalllager im als Motorlager 26 verbauten Zustand angenommen.

Gemäß der beiden nachfolgenden Rechtecke 2 und 3 wird ein vorgegebener Betriebszustand zum Start eines Messvorgangs erreicht, worauf der Befehl zur Durchführung einer Verformungsmessung gegeben wird.

Ein solches Triggersignal für einen Messstart wird entsprechend Fig. 1 ausgegeben, wenn eine vorbestimmte Motorleistung in einem Leistungsfenster 29 abgegeben wird.

In der Entscheidungsraute 4 wird zudem überprüft, ob ein vorgegebenes Temperaturfenster bei der Messung erfüllt ist. Je nach Anwendungsfall können gegebenenfalls auch weitere Randbedingungen vorgegeben werden, beispielsweise ein Wellengangfenster oder Tiefgangfenster entsprechend einem Beladungsfenster.

Sind die Umgebungsbedingungen/Randbedingungen zum Messen nicht erfüllt, wird der Messwertzähler dennoch hochgezählt, um dadurch sonst gegebene Verzerrungen der Messkurve weitgehend zu reduzieren (Rechteck 5).

Sind die Umgebungsbedingungen/Randbedingungen zum Messen erfüllt, wird ein Messwert erfasst und der Messwertzähler hochgezählt (Rechteck 6).

In der folgenden Entscheidungsraute 7 wird festgestellt, ob Werte für die Verformung vorhanden sind, ist dies nicht der Fall, wird der aktuelle Mess- und Auswertezyklus beendet.

Sind Messwerte vorhanden, werden diese gespeichert und mit vorhergehenden Messwerten verglichen (Rechteck 9).

Anschließend wird dieser Vergleich ausgewertet (Entscheidungsraute 10) und festgestellt in welchem Bereich des Steifigkeitsverlaufs sich das Bauteil befindet. Ein typischer Steifigkeitsverlauf ist nachfolgend anhand des Diagramms der Fig. 2 dargestellt und erläutert.

Wenn der erste Bereich 16 mit relativ schnell abfallender Steifigkeit zum Nutzungsbeginn, der durch Fließen und Setzen des Elastomermaterials hervorgerufen wird, festgestellt wird, ist dies kein Hinweis auf den Beginn eines baldigen Nutzungsendes, so dass der aktuelle Mess- und Auswertezyklus beendet wird (Rechteck 8).

Wird ein Steifigkeitsverlauf dergestalt ermittelt, dass der zweite Bereich 17 als Plateaubereich durch die aktuelle Messung weitergeführt ist, wird die Gerade zur Beschreibung des Plateaubereichs weitergeführt (Rechteck 11). Auch dies ist kein Hinweis auf den Beginn eines Nutzungsendes, so dass auch für diesen Fall der aktuelle Mess- und Auswertezyklus beendet wird (Rechteck 8).

Wird dagegen anschließend an einen Plateaubereich in einem dritten Bereich 19 des Steifigkeitsverlaufs ein progressiver Steifigkeitsabfall bei der Auswertung festgestellt, gibt das System eine Warnung aus, dass das überwachte Bauteil getauscht werden muss (Rechteck 12). Mit dieser Warnung bezüglich des überwachten Bauteils wird der Prozess beendet (Rechteck 13).

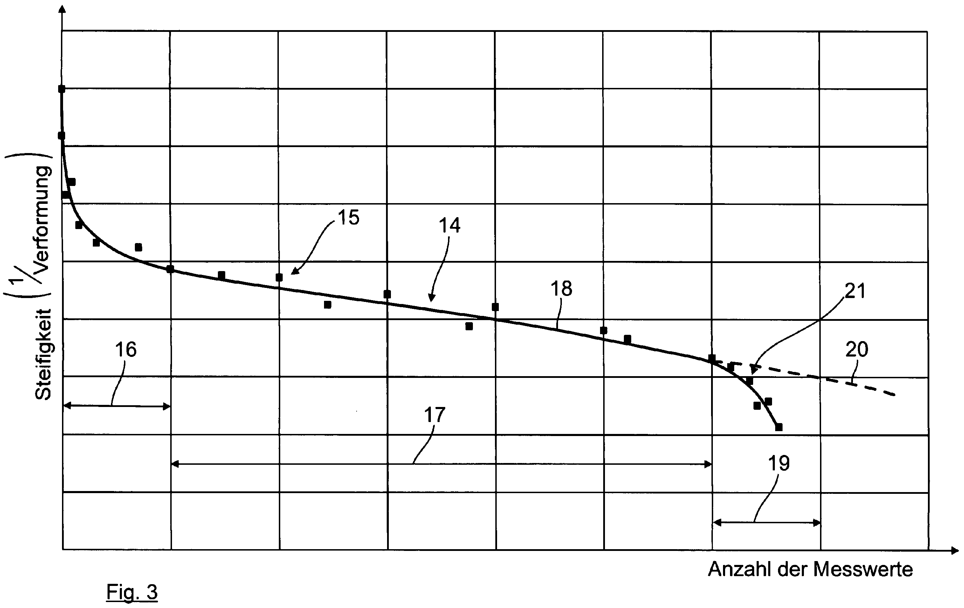

In Fig. 3 ist in einem Diagramm eine typische Messkurve 14 für eine Bauteilnutzung eines elastisch verformbaren Bauteils, hier beispielhaft für ein Gummi-Metalllager des Wasserfahrzeugs bei aufeinanderfolgenden innerhalb geringer Grenzen gleichen und zeitlich versetzt auftretenden Belastungen dargestellt.

Dazu ist nach oben auf der Y-Achse die jeweils ermittelte Kenngröße für die Steifigkeit als 1 geteilt durch Verformung aufgetragen. Auf der X-Achse des Diagramms ist die Anzahl der Messwerte aufgetragen, die als Nutzungsdauer interpretierbar ist, wobei mit gleichen Abständen für jeden vorbestimmten Antriebszustand ein dazu vorhandener Messwert im Diagramm als Messpunkt 15 eingezeichnet ist.

Durch nicht genau exakt erfassbare Antriebsbedingungen und Messtoleranzen streuen ersichtlich die Messpunkte 15 jedoch in nur geringem und für die zu treffende Aussage bezüglich der Nutzungsdauer unbedeutendem Umfang. Bei der Auswertung wird daher eine Interpolation vorgenommen mit folgendem Ergebnis:
Im ersten Steifigkeitsbereich 16 fällt die Steifigkeit durch Fließen und Setzen relativ schnell ab. Im zweiten Steifigkeitsbereich 17, der durch eine Gerade 18 durch Ausmittelung der Messwertstreuung angegeben werden kann, ist ein Plateaubereich durch einen nur sehr geringen Steifigkeitsabfall gekennzeichnet. Im Diagramm ist dieser Steifigkeitsbereich zur besseren Verdeutlichung mit einer relativ großen Neigung der Geraden 18 dargestellt. Zudem ist tatsächlich der zweite Steifigkeitsbereich 17 als Plateaubereich im Vergleich zum ersten und dritten Steifigkeitsbereich 16, 19 wesentlich größer/länger mit vielen Messwerten 15 und hier zur besseren Verdeutlichung des prinzipiellen Verlaufs der Messkurve verkürzt dargestellt. Anschließend an den Plateaubereich 17 wird im dritten Steifigkeitsbereich 19 ein schneller progressiver Steifigkeitsabfall festgestellt als Hinweis für einen bald erforderlichen Austausch des Bauteils entsprechend dem Rechteck 12 aus Fig. 1. Dieser progressive Steifigkeitsabfall als deutliche Abweichung von der Verlängerung 20 der Geraden 18 ist bereits kurz nach seinem Beginn (beispielsweise mit Messwert 21) schnell und einfach feststellbar.

## Patentansprüche

1. Wasserfahrzeug mit einem Antriebsaggregat und mit wenigstens einem elastisch verformbaren Bauteil als Strukturteil und/oder Lagerteil, auf das im Betriebsverlauf von wechselnden Antriebszuständen abhängige, unterschiedliche Verformungskräfte einwirken, die zu einem die Bauteilnutzungsdauer begrenzenden Bauteilverschleiß führen,
**dadurch gekennzeichnet,**
**dass** ein sich zeitversetzt wiederholender, jeweils gleicher Antriebszustand vorbestimmbar ist, dem eine bestimmte, jeweils gleiche Verformungskraft zugeordnet ist, und dass eine Erfassungseinheit (27) vorgesehen ist, die so eingerichtet ist, dass damit jeweils ein solcher vorbestimmter Antriebszustand erkannt und erfasst wird,
**dass** im Falle der Erkennung und Erfassung eines solchen vorbestimmten Antriebszustands (2) durch die Erfassungseinheit (27) damit ein Startsignal erzeugt wird, womit ein Messvorgang gestartet wird (3), wobei für eine Bauteilüberwachung mit wenigstens einem bauteilzugeordneten Sensor und einer nachgeschalteten Mess- und Auswerteeinheit (31) eine Bauteilverformung als Kenngröße für eine aktuelle Bauteilsteifigkeit messbar ist und der Messwert speicherbar ist, dass mit einer Vergleichereinheit der Mess- und Auswerteeinheit (31) ein Vergleich eines aktuellen Verformungsmesswerts bezüglich vorhergehender, gespeicherter Verformungsmesswerte durchführbar ist (9) mit dem Ergebnis,
**dass** die über eine relativ lange Nutzungsdauer etwa gleiche Verformungsmesswerte, bzw. entsprechende Kenngrößen für die Bauteilsteifigkeit speicherbar sind und eine aus den Messwerten gebildete Messkurve (14) einen Plateaubereich (17) mit im Verlauf dieser Nutzungsdauer geringem Neigungsanstieg für die Bauteilverformung bzw. geringem Neigungsabfall für die Bauteilsteifigkeit ergibt, womit eine weitere sichere Bauteilfunktion feststellbar ist, oder
**dass** alternativ über eine gegenüber der Nutzungsdauer des Plateaubereichs kurze Nutzungsdauer nacheinander sukzessiv und progressiv größer werdende Verformungsmesswerte erfassbar sind, so dass der Plateaubereich mit einem gegenüber dem Plateaubereich stärkeren Steigungsanstieg einer Messkurve bezüglich der Bauteilverformung bzw. einem gegenüber der Neigung des Plateaubereichs stärkeren Neigungsabfall einer Messkurve (14) bezüglich der Bauteilsteifigkeit verlassen ist (19), wodurch der Beginn einer verschleißbedingen vorgebbaren Bauteil-Restnutzungsdauer feststellbar ist und eine entsprechende Warninformation ausgebbar ist (12), beim Erreichen eines als Schwellwert vorgegebenen Steigungsanstiegs bzw. Neigungsabfalls der Messkurve (14).

2. Wasserfahrzeug nach Anspruch 1, **dadurch gekennzeichnet, dass** ein zu Beginn einer Bauteilnutzung erfasster ansteigender oder abfallender Bereich (16) der Messkurve (14), bei der Auswertung für den Beginn einer Restnutzungsdauer nicht herangezogen wird.

3. Wasserfahrzeug nach Anspruch 1 oder 2, **dadurch gekennzeichnet, dass** der vorbestimmte Antriebszustand direkt als vorbestimmte Motorleistung des Antriebsaggregats erfassbar ist und/oder als vorbestimmte Motordrehzahl (29) oder als vorbestimmte Schwingungsfrequenz entsprechend der Motordrehzahl erfassbar ist, wobei gegebenenfalls niederfrequente Anregungen durch Wellenschlag und/oder Seegang mit einem Tiefpassfilter bei der Erfassung des vorbestimmten Antriebszustands und/oder bei der Auswertung herausfilterbar sind.

4. Wasserfahrzeug nach einem der Ansprüche 1 bis 3, **dadurch gekennzeichnet, dass** für den Fall, dass nach dem Start und der Durchführung eines Messvorgangs der für den Start erfasste Antriebszustand für eine vorbestimmte Zeitdauer feststellbar ist, ist nach einer vorbestimmten Wartezeit jeweils selbsttätig ein weiterer Messvorgang startbar und durchführbar.

5. Wasserfahrzeug nach einem der Ansprüche 1 bis 4, **dadurch gekennzeichnet, dass** ein überwachtes elastisches Bauteil ein Gummi-Metalllager, insbesondere als Motorlager (26) und/oder Getriebelager und/oder elastische Kupplung ist, und/oder
dass ein überwachtes elastisches Bauteil ein Strukturbauteil aus Kunststoff, insbesondere aus Faserverbundwerkstoffen ist.

6. Wasserfahrzeug nach einem der Ansprüche 1 bis 5, **dadurch gekennzeichnet,**
**dass** die Umgebungstemperatur um das Bauteil (26) mit einer Temperaturmesseinheit erfassbar ist und der Start eines Messvorgangs und/oder die Verwertung eines Messwerts nur freigebbar ist (4), wenn die Umgebungstemperatur für jeden Messvorgang in einem vorgebbaren jeweils gleichen Temperaturfenster liegt, wobei das Temperaturfenster in einem Temperaturbereich von 0°C bis 35°C wählbar ist, und
**dass** beim Vorliegen der übrigen Startbedingungen ein Messwertzähler dennoch hochsetzbar ist (5), wenn nur die Temperaturbedingung und gegebenenfalls weitere vorgebbare Randbedingungen zur Freigabe nicht erfüllt sind.

7. Wasserfahrzeug nach einem der Ansprüche 1 bis 4, **dadurch gekennzeichnet, dass** die bisherige Bauteilnutzungsdauer bis zur Abgabe einer Warninformation erfassbar ist und mit der Warninformation eine Information zur möglichen unkritischen Weiterbenutzung bzw. bis zu einem zwingend erforderlichen Bauteilaustausch mit einer Weiterbenutzungsdauer als Restlebensdauer von 10% der bisherigen Bauteilnutzungsdauer abgebbar ist.

8. Wasserfahrzeug nach einem der Ansprüche 1 bis 5, **dadurch gekennzeichnet,**
**dass** als Sensor zur Messung der Bauteilverformung eine Sensorik zur Messung einer Verschiebung und/oder einer Geschwindigkeit und/oder einer Beschleunigung verwendbar ist, womit eine Verformung als Verschiebung zwischen Bauteilkomponenten und/oder Anbauteilen direkt oder indirekt messbar ist, und
**dass** die Sensorik zumindest teilweise in das verformbare Bauteil integriert und/oder an angrenzenden/benachbarten Anbauteilen angeordnet ist.

9. Wasserfahrzeug nach einem der Ansprüche 1 bis 6, **dadurch gekennzeichnet, dass** die Erfassungseinheit und die Mess- und Auswerteeinheit (31) mit ihren Komponenten in eine Zentralelektronik des Wasserfahrzeugs voll- oder teilintegriert sind.

## Claims

1. Aquatic vehicle having a drive assembly and having at least one elastically deformable component as a structural part and/or bearing part on which different deformation forces which are dependent on changing drive states in the operating sequence act and give rise to component wear which limits the component operating life,
**characterized**
**in that** a respectively identical drive state which recurs at time intervals can be predetermined and is assigned a specific, respectively identical deformation force, and in that a sensing unit (27) is provided which is configured in such a way that in each case such a predetermined drive state is detected and sensed therewith,
**in that** if such a predetermined drive state (2) is detected and sensed by the sensing unit (27) a start signal is generated therewith, by which means a measuring process is started (3), wherein for component monitoring with at least one component-assigned sensor and a downstream measuring and evaluation unit (31) a component deformation can be measured as a characteristic variable for a current component rigidity and the measured value can be stored, in that with a comparator unit of the measuring and evaluation unit (31) a comparison of a current deformation measured value can be made with preceding, stored deformation measured values (9) with the result that the deformation measured values which are approximately the same over a relatively long operating life, or corresponding characteristic values for the component rigidity can be stored, and a measurement curve (14) which is formed from the measured values results in a plateau region (17) with, in the course of this operating life, a small rise in inclination for the component deformation or small drop in inclination for the component rigidity, wherein a further reliable component function can be detected or
**in that** alternatively deformation measured values which one after the other successively and progressively become larger can be acquired over an operating life which is short in comparison with the operating life of the plateau region, with the result that the plateau region with a relatively large rise in inclination, in comparison with the plateau region, of a measurement curve relating to the component deformation or a relatively large drop in inclination, compared to the inclination of the plateau region, of a measurement curve (14) relating to the component rigidity is exited (19), as a result of which the start of a wear-induced, predefinable component residual operating life can be detected and corresponding warning information can be output (12) when a rise in gradient or drop in inclination, predefined as a threshold value, of the measurement curve (14) is reached.

2. Aquatic vehicle according to Claim 1, **characterized in that** a rising or dropping region (16), sensed at the start of use of a component, of the measurement curve (14) is not used during the evaluation for the start of a residual operating life.

3. Aquatic vehicle according to Claim 1 or 2, **characterized in that** the predetermined drive state can be sensed directly as predetermined engine power of the drive assembly and/or can be sensed as a predetermined engine rotational speed (29) or as a predetermined oscillation frequency corresponding to the engine rotational speed, wherein, if appropriate, low-frequency excitations as a result of the wash of the waves and/or swell of the sea can be filtered out with a low-pass filter during the sensing of the predetermined drive state and/or during the evaluation.

4. Aquatic vehicle according to one of Claims 1 to 3, **characterized in that** if after the start and the execution of a measurement process the drive state which is sensed for the start can be detected for a predetermined time period, after a predetermined waiting time a further measurement process can in each case be started and carried out automatically.

5. Aquatic vehicle according to one of Claims 1 to 4, **characterized in that** a monitored elastic component is a rubber-metal bearing, in particular as an engine bearing (26) and/or a transmission bearing and/or elastic coupling and/or **in that** a monitored elastic component is a structural component made of plastic, in particular made of composite fibre materials.

6. Aquatic vehicle according to one of Claims 1 to 5, **characterized in that** the ambient temperature around the component (26) can be sensed with a temperature-measuring unit, and the start of a measuring process and/or the utilization of a measured value can be enabled (4) only if the ambient temperature for each measurement process is in a predefined, respectively identical temperature window, wherein the temperature window can be selected in a temperature range from 0° to 35°C,
and **in that** when the other starting conditions are satisfied, a measured value counter can still be incremented (5) if only the temperature condition and, if appropriate, further predefinable peripheral conditions for enabling are not satisfied.

7. Aquatic vehicle according to one of Claims 1 to 4, **characterized in that** the previous component operating life up to the outputting of warning information can be sensed, and with the warning information it is possible to output information relating to the possible non-critical continued use or up to an absolutely necessary replacement of components with a continued operating life as a residual operating life of 10% of the previous component operating life.

8. Aquatic vehicle according to one of Claims 1 to 5, **characterized in that** a sensor system for measuring a displacement and/or a speed and/or an acceleration can be used as a sensor for measuring component deformation, wherein a deformation can be measured directly or indirectly as a displacement between components and/or attachments, and
**in that** the sensor system is integrated at least partially into the deformable component and/or is arranged on adjoining/neighbouring attachments.

9. Aquatic vehicle according to one of Claims 1 to 6, **characterized in that** the sensing unit and the measuring and evaluation unit (31) are fully or partially integrated with their components into a central electronic system of the aquatic vehicle.

## Revendications

1. Navire comportant un groupe de propulsion et au moins un composant déformable élastiquement sous forme de pièce de structure et/ou de pièce d'appui, sur laquelle agissent au cours du fonctionnement des forces de déformation différentes, qui dépendent d'états de propulsion changeants et conduisent à une usure du composant limitant la durée de vie résiduelle du composant,
**caractérisé en ce que**
un état de propulsion chaque fois identique se répétant de façon décalée dans le temps, auquel une force de déformation déterminée chaque fois identique est associée, peut être prédéterminé et **en ce qu'**il est prévu une unité de détection (27), qui est conçue de telle manière qu'un tel état de propulsion prédéterminé soit chaque fois reconnu et détecté par celle-ci,
en cas de reconnaissance et de détection d'un tel état de propulsion prédéterminé (2) par l'unité de détection (27), celle-ci produit un signal de démarrage, avec lequel on démarre une opération de mesure (3), dans lequel, pour une surveillance du composant avec au moins un capteur associé au composant et une unité de mesure et d'évaluation qui suit (31), une déformation du composant en tant que grandeur caractéristique d'une rigidité actuelle du composant peut être mesurée et la valeur de mesure peut être mémorisée,
une comparaison d'une valeur de mesure de déformation actuelle par rapport à des valeurs de mesure de déformation antérieures mémorisées peut être effectuée (9) avec une unité de comparaison de l'unité de mesure et d'évaluation (31) avec le résultat,
que les valeurs de mesure de déformation sensiblement identiques sur une durée d'utilisation relativement longue ou des grandeurs caractéristiques correspondantes pour la rigidité du composant peuvent être mémorisées et qu'une courbe de mesure (14) formée à partir des valeurs de mesure présente une zone de palier (17) avec une faible inclinaison ascendante pour la déformation du composant ou une faible inclinaison descendante pour la rigidité du composant au cours de cette durée d'utilisation, avec laquelle une autre fonction sûre du composant peut être déterminée,
ou
que de façon alternative des valeurs de mesure de déformation croissantes successivement et progressivement l'une après l'autre sur une durée d'utilisation courte par rapport à la durée d'utilisation de la zone de palier peuvent être détectées, de telle manière que la zone de palier soit quittée (19) avec une inclinaison ascendante d'une courbe de mesure relative à la déformation du composant plus forte par rapport à la zone de palier ou avec une inclinaison descendante d'une courbe de mesure (14) relative à la rigidité du composant plus forte par rapport à l'inclinaison de la zone de palier, permettant ainsi de déterminer le début d'une durée d'utilisation résiduelle du composant prévisible en raison de l'usure et d'émettre un message d'avertissement correspondant (12) lors de l'atteinte d'une inclinaison ascendante ou d'une inclinaison descendante de la courbe de mesure (14) prédéterminée comme valeur de seuil.

2. Navire selon la revendication 1, **caractérisé en ce qu'**une zone ascendante ou descendante (16) de la courbe de mesure (14) détectée au début d'une utilisation du composant n'est pas utilisée lors de l'évaluation du début d'une durée d'utilisation résiduelle.

3. Navire selon une revendication 1 ou 2, **caractérisé en ce que** l'état de propulsion prédéterminé peut être détecté directement par le biais d'une puissance prédéterminée du moteur du groupe de propulsion et/ou peut être détecté par un nombre de tours prédéterminé (29) ou une fréquence de vibration prédéterminée correspondant au nombre de tours du moteur, dans lequel le cas échéant des excitations à basse fréquence par des remous et/ou par la houle peuvent être éliminées par filtrage avec un filtre passe-bas lors de la détection de l'état de propulsion prédéterminé et/ou lors de l'évaluation.

4. Navire selon l'une quelconque des revendications 1 à 3, **caractérisé en ce que** dans le cas où, après le démarrage et l'exécution d'une opération de mesure, l'état de propulsion détecté pour le démarrage peut être déterminé pendant une durée prédéterminée, une autre opération de mesure peut être lancée et exécutée chaque fois automatiquement après un temps d'attente prédéterminé.

5. Navire selon l'une quelconque des revendications 1 à 4, **caractérisé en ce qu'**un composant élastique surveillé est un support caoutchouc-métal, en particulier un support de moteur (26) et/ou un support de boîte de vitesses et/ou un accouplement élastique, et/ou **en ce qu'**un composant élastique surveillé est un composant de structure en matière plastique, en particulier en matériaux composites renforcés par des fibres.

6. Navire selon l'une quelconque des revendications 1 à 5, **caractérisé en ce que** la température ambiante autour du composant (26) peut être détectée avec une unité de mesure de la température et le démarrage d'une opération de mesure et/ou l'évaluation d'une valeur de mesure ne peut être libéré(e) (4) que lorsque la température ambiante se situe pour chaque opération de mesure dans une fenêtre de température chaque fois identique pouvant être prédéterminée, dans lequel la fenêtre de température peut être choisie dans une plage de température de 0°C à 35°C, et **en ce que**, lorsque les autres conditions de démarrage sont présentes, un compteur de valeur de mesure peut néanmoins être augmenté (5), lorsque seule la condition de température et éventuellement d'autres conditions aux limites pouvant être prédéterminées pour la libération ne sont pas remplies.

7. Navire selon l'une quelconque des revendications 1 à 4, **caractérisé en ce que** la durée d'utilisation actuelle du composant jusqu'à l'émission d'un message d'avertissement peut être détectée et avec le message d'avertissement une information peut être émise en ce qui concerne l'utilisation ultérieure non critique possible ou jusqu'à un remplacement absolument nécessaire du composant avec une durée d'utilisation ultérieure comme durée de vie résiduelle de 10 % de la durée d'utilisation actuelle du composant.

8. Navire selon l'une quelconque des revendications 1 à 5, **caractérisé en ce que** l'on peut utiliser comme capteur pour la mesure de la déformation du composant un ensemble de capteurs pour la mesure d'un déplacement et/ou d'une vitesse et/ou d'une accélération, avec lequel une déformation peut être mesurée directement ou indirectement sous la forme d'un déplacement entre des composantes du composant et/ou des pièces rapportées, et **en ce que** l'ensemble de capteurs est intégré au moins en partie dans le composant déformable et/ou est disposé sur des pièces rapportées adjacentes/voisines.

9. Navire selon l'une quelconque des revendications 1 à 6, **caractérisé en ce que** l'unité de détection et l'unité de mesure et d'évaluation (31) avec leurs composants sont entièrement ou partiellement intégrées dans une électronique centrale du navire.
